# EUROPEAN PATENT APPLICATION

(11) **EP 4 572 242 A1**
(43) Date of publication of application: **18.06.2025**
(21) Application number: 24218279.8
(22) Date of filing: 09.12.2024
(51) Int. Cl.: H04L 12/46, H04J 3/06, H04L 12/40

(54) **COMMUNICATION RELAY DEVICE, COMMUNICATION NETWORK SYSTEM, COMMUNICATION RELAY METHOD, COMPUTER PROGRAM**

(30) Priority: 12.12.2023 JP 2023209331
(71) Applicant: DENSO CORPORATION, Kariya-city, Aichi-pref., 448-8661 (JP)
(72) Inventor: TAJIMA, Takeshi, Minato-ku, Tokyo, 107-0075 (JP)
(74) Representative: Winter, Brandl - Partnerschaft mbB

(57) **Abstract**

A communication relay device relays communication between a plurality of masters (1, 2) that comply with a communication protocol that does not support a VLAN (Virtual Local Area Network) function and a plurality of slaves (3, 4, ..., X) that comply with a communication protocol that supports the VLAN function, via a communication network (6), and the relay device includes a frame conversion unit (7) configured to convert a time synchronization communication frame transmitted from the plurality of masters into a communication frame that supports the VLAN function.

## Description

The present disclosure relates to a device for relaying communication between multiple masters and multiple slaves via a communication network, a communication network system including the device, a communication relay method, and a computer program.

In a network system for in-vehicle communication, a technology called a Virtual Local Area Network (VLAN) is sometimes applied, in which one physical switch is divided into multiple virtual switches, as disclosed in, for example, Patent Literature 1.
Patent Literature 1: JP 2022-52358 A

When multiple in-vehicle devices are master and slave devices and communicate via a network, communication standards that each device complies with may not be unified. Therefore, there may be a combination in which the slave device supports VLAN but the master device does not support the VLAN. In this case, communication using the VLAN function cannot be performed.

The present disclosure has been made in consideration of the above circumstances, and it is an object of the present disclosure to provide a communication relay device capable of applying a VLAN function even in a combination of a VLAN-unsupported master and a VLAN-supported slave, a communication network system including the device, a communication relay method, and a computer program.

According to one example embodiment, a relay device relays communication between a plurality of masters that comply with a communication protocol that does not support a VLAN (Virtual Local Area Network) function and a plurality of slaves that comply with a communication protocol that supports the VLAN function, via a communication network. At that time, a frame conversion unit converts the time synchronization communication frame transmitted from the master into a communication frame that supports the VLAN function. As a result, even when the master does not support the VLAN function, communication with the slave with the enabled VLAN function is possible.

Further, according to the communication relay device, the plurality of masters comply with IEEE 802.1AS-2020, the plurality of slaves comply with IEEE 802.1AS-2011, and the frame conversion unit allocates the value of the domainNumber field in the message header of the time synchronization communication frame to the VLAN ID field. Thereby, it is possible to use the master's domainNumber value as the VLAN ID, and perform communication with the enabled VLAN function.

Furthermore, according to the communication relay device, in a case where the allocation to the VLAN ID is complete, the frame conversion unit initializes the value of the domainNumber field and converts the time synchronization communication frame to a version that supports IEEE 802.1AS-2011. Thereby, it is possible to perform the communication between the master and the slave compliant to different communication protocols.

Objects, features and advantages of the present disclosure will become more apparent from the following detailed description made with reference to the accompanying drawings.
FIG. 1 is a functional block diagram showing a configuration of an in-vehicle communication system.
FIG. 2 is a diagram showing communication protocols that each GM, each slave, and each relay device complies with.
FIG. 3 is a diagram showing an in-vehicle communication system shown in FIG. 1 in a configuration closer to an actual situation.
FIG. 4 is a flowchart showing processes executed mainly by a frame conversion unit of a relay device.
FIG. 5 shows a gPTP message header.
FIG. 6 is a diagram showing fields for allocating domainNumber values in a case of an Ethernet II frame.
FIG. 7 is a diagram showing fields for allocating domainNumber values in a case of an 802.3 LLC/SNAP frame.
FIG. 8 is a diagram showing a variation of the configuration of the in-vehicle communication system according to a second embodiment.
FIG. 9 is a diagram showing a variation of the configuration of the in-vehicle communication system according to a third embodiment.

### (First Embodiment)

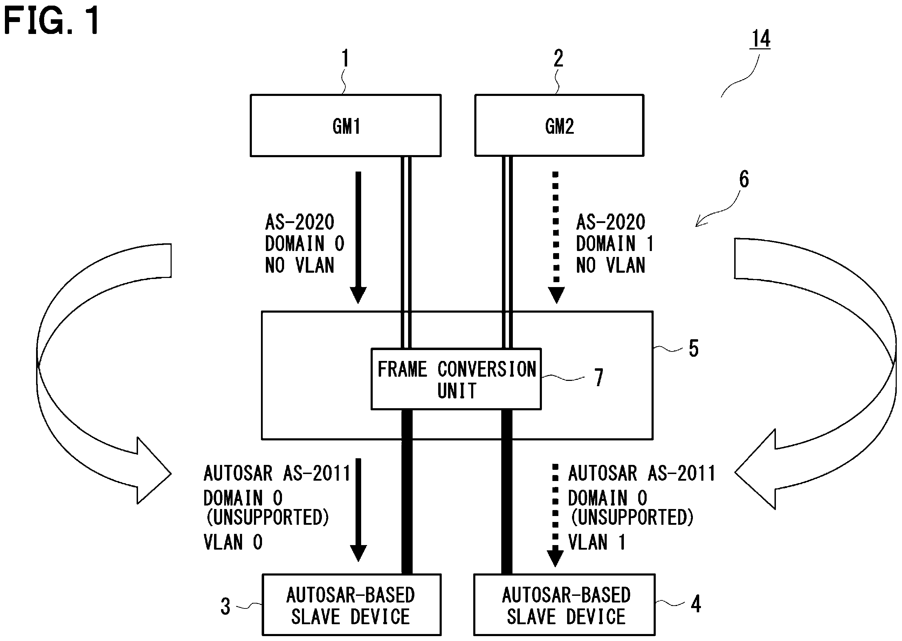

As shown in FIG. 1, in an in-vehicle communication system of the present embodiment, for example, two masters GM (Global Master) 1 and 2 and for example, two slaves 3 and 4 are connected via a communication network 6 including a relay device 5. Ethernet (registered trademark) is adopted for the communication network. The GMs 1 and 2 and the slaves 3 and 4 are all electronic control units (ECUs) mounted on a vehicle. The GM 1 and 2 are compliant to a communication protocol of IEEE802.1AS-2020. Furthermore, GM 1 and GM 2 are not compliant to IEEE802.1q, that is, do not support a VLAN (Virtual Local Area Network) function. Accordingly, the GM 1 and GM 2 are multi-domains that can use multiple gPTP (Generalized Precision Time Protocol) domains.

The slaves 3 and 4 comply with a communication protocol of AUTOSAR (AUTomotive Open System ARchitecture), that is, IEEE802.1AS-2011. Moreover, the slaves 3 and 4 comply with IEEE802.1q, that is, support the VLAN function. AUTOSAR is the specification name of a platform for achieving standardization of in-vehicle software. The slaves 3 and 4 are single domains that can use only one gPTP domain.

The data transmitted from the GMs 1 and 2 is transferred to the slaves 3 and 4 via the communication line and the relay device 5. The relay device 5 includes a controller and a memory, neither of which are shown, and the controller includes a frame conversion unit 7. The frame conversion unit 7 adds information for enabling the VLAN function to a time synchronization communication frame included in the above data. The time synchronization communication frame to which the information for enabling the VLAN function has been added is transferred to the slaves 3 and 4. That is, the relay device 5 converts the multi-domain time synchronization network of IEEE802.1AS-2020 into a single-domain time synchronization network using the VLAN. Alternatively, it can be said that a communication frame of IEEE 802.1AS-2020 without the VLAN function is converted into a communication frame of IEEE 802.1AS-2011 with the VLAN function while maintaining the functionality of time domain division. The above constitutes an in-vehicle communication system 14 which is the communication network system. Hereinafter, the time synchronization communication frame may be simply referred to as a communication frame.

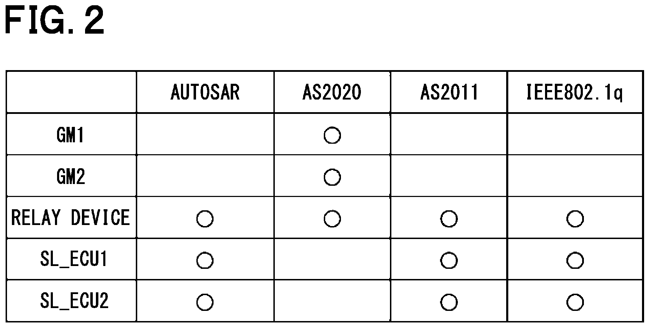

FIG. 2 shows communication protocols that the GMs 1 and 2, the slaves 3 and 4, and the relay device 5 respectively comply with. The GMs 1 and 2 comply with IEEE802.1AS-2020, but do not comply with AUTOSAR, IEEE802.1AS-2011, and IEEE802.1q. The slaves 3 and 4 comply with AUTOSAR, IEEE802.1AS-2011 and IEEE802.1q, but do not comply with IEEE802.1AS-2020. The relay device 5 complies with AUTOSAR, IEEE802.1AS-2020, IEEE802.1AS-2011 and IEEE802.1q.

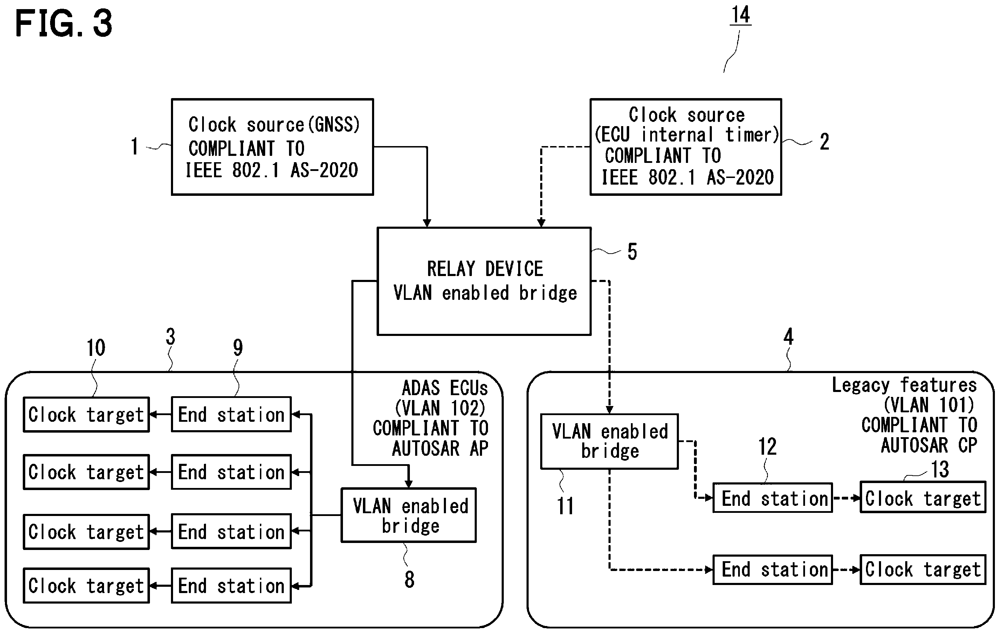

FIG. 3 shows a system configuration that is closer to an actual use case. The GM 1 is a clock source having a function corresponding to, for example, a Global Navigation Satellite System (GNSS). The GM 2 is a clock source, for example, as an internal timer of the ECU. The slave 3 is connected to the relay device 5 via a bridge 8 that supports the VLAN function, and includes an end-end station 9 that is a communication node, and a clock target 10 that operates according to a clock supplied by the GM 1 or 2. Similarly, the slave 4 includes a bridge 11 that supports the VLAN function, an end station 12, and a clock target 13. The slave 4 is an ECU that is responsible for in-vehicle device functions such as engine control, body control, and the like. Similarly, the relay device 5 is configured as a bridge that supports the VLAN function. Each of the slaves 3, 4 includes one or more end stations 9 and 12.

The slave 3 is, for example, an ECU related to ADAS (Advanced Driver-Assistance Systems) functions, complies with AUTOSAR AP (Adaptive Platform), and the VLAN ID is 102. The slave 4 complies with AUTOSAR CP (Classic Platform) and the VLAN ID is 101. By enabling the VLAN function, a physically connected network can be used as a virtually partitioned network. The slave 3 and slave 4 are connected via the relay device 5 but are set so as not to be able to communicate with each other. By virtually dividing the networks, the effects of a functional failure that may occur in one network are prevented from propagating to another network.

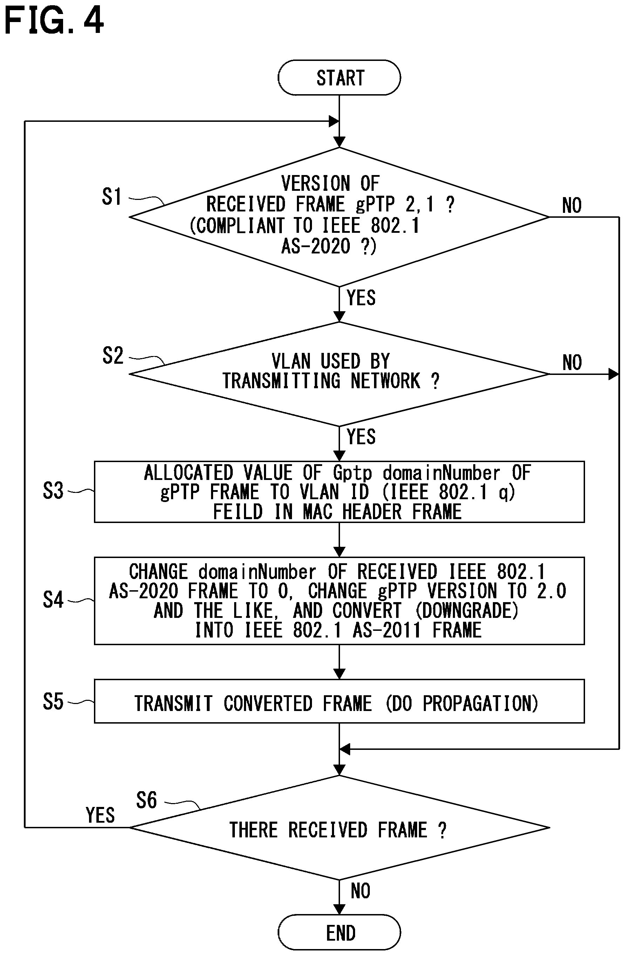

Next, an operation of the present embodiment will be described. The process shown in FIG. 4 is implemented by a microcomputer constituting the controller of the relay device 5 executing a program. The frame conversion unit 7 of the relay device 5 determines whether the gPTP version of the received communication frame is 2.1, that is, whether it complies with IEEE802.1AS-2020 (S1). When the gPTP version is 2.1 (Yes), it is determined whether the communication network 6 that transmits the communication frame can use the VLAN function, that is, whether the slaves 3 and 4 support the VLAN function, based on the communication protocol with which each of them complies (S2).

When the determination is "Yes" in step S2, the value of the domainNumber field of the gPTP frame is allocated to the VLAN ID (IEEE802.1q) field in the MAC header frame (S3). Then, the domainNumber value of the received IEEE802.1AS-2020 frame is cleared to 0, the gPTP version is changed to 2.0, and the frame is converted to an IEEE802.1AS-2011 frame, that is, downgraded (S4). Then, the converted frame is transmitted to the slave 3 or 4 (S5). After execution of step S5, it is determined whether there is still the received communication frame (S6). When there are still received communication frames (Yes), the process returns to step S1 and the process repeats. When there are no more received communication frames (No), the process ends.

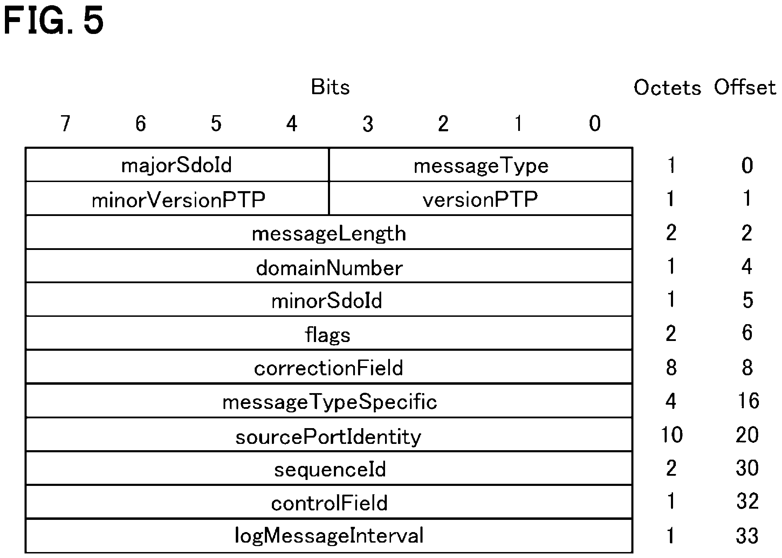

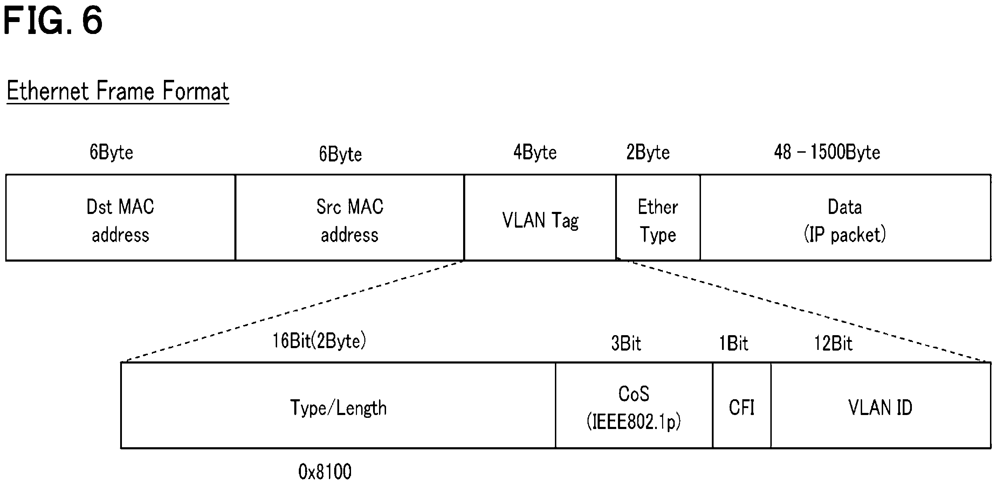

The message header shown in FIG. 5 is shown as Table 10-7-PTP message header in 10.6.2.1 General header specifications of the standard of IEEE (registered trademark) Std 802.1AS-2020. In the case of the Ethernet II frame shown in FIG. 6, the second to fourth bytes in the four-byte IEEE802.1q field are the VLAN ID field, and the domainNumber value of the message header is allocated thereto. The Ethernet II frame is shown in a simplified manner, and includes an 8-byte preamble at the beginning and a 4-byte FCS (Frame Check Sequence) at the end.

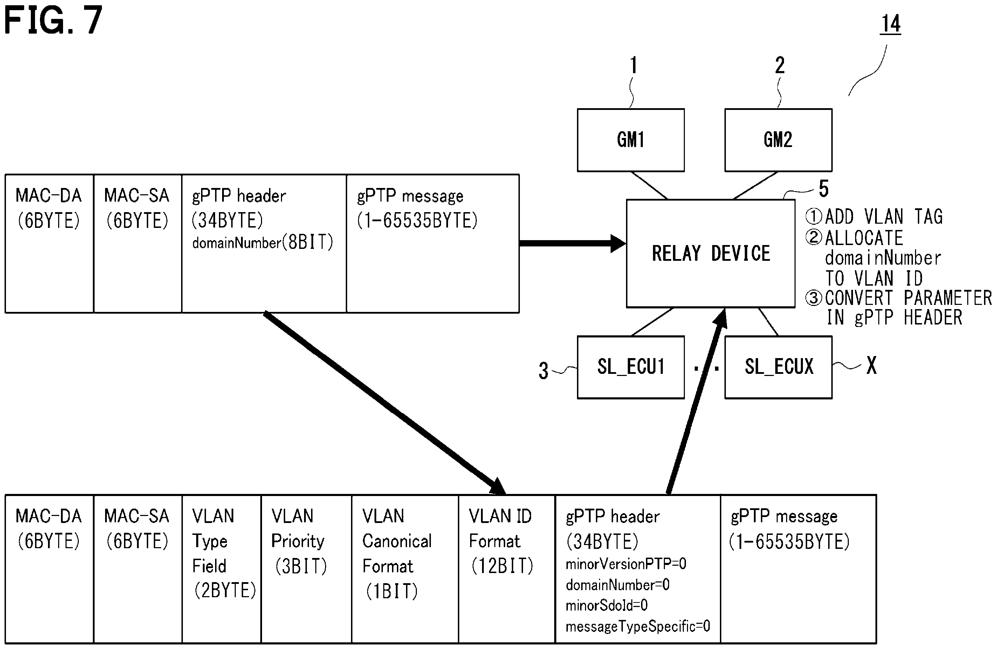

In addition, in the case of the IEEE 802.3 LLC (Logical Link Control)/SNAP (Sub Network Access Protocol) frame shown in FIG. 7, the domain number value is allocated to eight consecutive bits of the 12-bit VLAN ID format. This figure also shows the process of clearing the domainNumber value to 0 in step S4. In the figure, the in-vehicle communication system 14 is shown in a simplified form, and the slave 3 corresponds to "SL_ECU1". In addition, it is assumed here that there are three or more slaves, and the Xth slave is designated as "SL_ECUX." The IEEE 802.3 LLC/SNAP frame is shown in a simplified manner, including an 8-byte preamble and SFD (Start Frame Delimiter) at the beginning, and a 4-byte FCS at the end.

As described above, according to this embodiment, the relay device 5 relays communication between the GMs 1 and 2, which are compliant with a communication protocol that does not support the VLAN function, and the slaves 3 and 4, which are compliant with a communication protocol that supports the VLAN function, via the communication network 6. At that time, the frame conversion unit 7 converts the time synchronization communication frame transmitted from the GM 1 or 2 into the communication frame that supports the VLAN function. As a result, even when the master does not support the VLAN function, communication with the slave with the enabled VLAN function is possible.

More specifically, the GMs 1 and 2 are compliant with IEEE 802.1AS-2020, and the slaves 3 and 4 are compliant with IEEE 802.1AS-2011. In this case, the frame conversion unit 7 allocates the value of the domainNumber field in the message header of the time synchronization communication frame to the VLAN ID field. Thereby, it is possible to use the master's domainNumber value as the VLAN ID, and perform communication with the enabled VLAN function.

Furthermore, in a case where the allocation to the VLAN ID is complete, the frame conversion unit 7 initializes the value of the domainNumber field and converts the time synchronization communication frame to a version that supports IEEE 802.1AS-2011. Thereby, it is possible to perform communication between the GMs 1 and 2 and the slaves 3 and 4, which comply with different communication protocols.

### (Second and Third Embodiments)

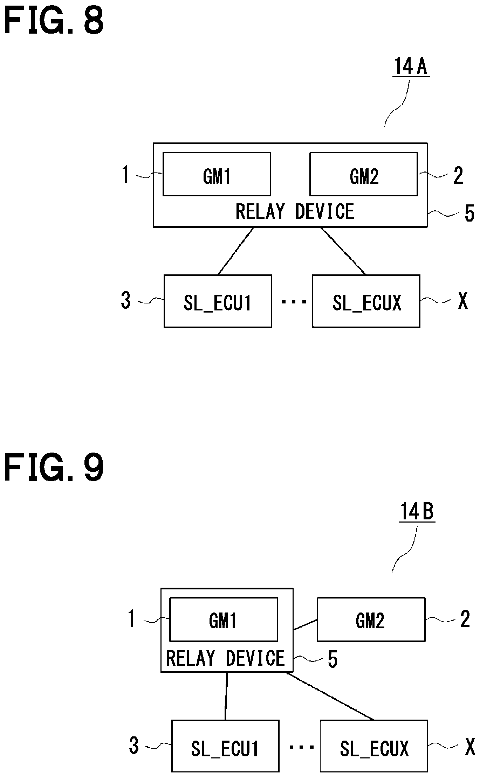

Hereinafter, the identical parts as those in the first embodiment will be designated by the same reference numerals, and explanations thereof will be omitted. Differences from the first embodiment will be described. The second and third embodiments show variations in the configuration of the in-vehicle communication system. In the case where the in-vehicle communication system 14 of the first embodiment is shown in FIG. 7, an in-vehicle communication system 14A of the second embodiment shown in FIG. 8 has a configuration in which the GMs 1 and 2 are placed in the relay device 5. An in-vehicle communication system 14B according to the third embodiment shown in FIG. 9 has a configuration in which only the GM 1 is placed in the relay device 5.

### (Other Embodiments)

The master does not necessarily have to comply with the communication protocol IEEE802.1AS-2020, and the slave does not necessarily have to comply with the communication protocol IEEE802.1AS-2011. At least, the master needs to comply with the communication protocol that supports the VLAN function, and the slave needs to comply with the communication protocol that does not support the VLAN function.

The number of masters may be three or more. The master and the slave do not necessarily have to be electronic control units. These may also be applied to network systems other than the in-vehicle communication system. Although the present disclosure has been described in accordance with the embodiment, it is understood that the present disclosure is not limited to such an embodiment or a structure. The present disclosure incorporates various modifications and variations within the scope of equivalents. Furthermore, various combinations and aspects, and other combination and aspect including only one element, more than one element or less than one element, are also within the sprit and scope of the present disclosure.

Means and/or functions provided by each device or the like may be provided by software recorded in a substantive memory device and a computer that can execute the software, software only, hardware only, or some combination of them. For example, when the control device is provided by an electronic circuit that is hardware, the control device may be provided by a digital circuit or an analog circuit that includes a large number of logic circuits.

The controller and the method thereof of the present disclosure may be implemented by a dedicated computer provided by configuring a processor and a memory programmed to execute one or more functions embodied by a computer program. Alternatively, the controller and the method described in the present disclosure may be implemented by a dedicated computer provided by forming a processor with one or more dedicated hardware logic circuits. Alternatively, the controller and the method described in the present disclosure may be implemented by one or more dedicated computers including a combination of a processor and a memory programmed to execute one or multiple functions and a processor including one or more hardware logic circuits. The computer programs may be stored, as instructions to be executed by a computer, in a non-transitory tangible computer-readable storage medium.

### (Description of Reference Numerals)

In the drawings, 1 and 2 correspond to GMs, 3 and 4 are slaves, 5 corresponds to a relay device, 6 corresponds to a communication network, 7 corresponds to a frame conversion unit, and 14 corresponds to an in-vehicle communication system.

## Claims

1. A communication relay device for relaying communication between a plurality of masters (1, 2) that comply with a communication protocol that does not support a VLAN (Virtual Local Area Network) function and a plurality of slaves (3, 4, ..., X) that comply with a communication protocol that supports the VLAN function, via a communication network (6), the relay device comprising
a frame conversion unit (7) configured to convert a time synchronization communication frame transmitted from the plurality of masters into a communication frame that supports the VLAN function.

2. The communication relay device according to claim 1, wherein
the plurality of masters comply with IEEE (registered trademark) 802.1AS-2020,
the plurality of slaves comply with IEEE 802.1AS-2011, and
the frame conversion unit is configured to allocate a value of a domainNumber field in a message header of the time synchronization communication frame to a VLAN ID field.

3. The communication relay device according to claim 2, wherein
the frame conversion unit initializes the value of the domainNumber field and converts the time synchronization communication frame to a version that supports the IEEE 802.1AS-2011 in a case where allocation to the VLAN ID field is completed.

4. A communication network system comprising:
the communication relay device according to any one of claims 1 to 3,
the plurality of masters; and
the plurality of slaves.

5. A communication relay method for relaying communication between a plurality of masters that comply with a communication protocol that does not support a VLAN (Virtual Local Area Network) function and a plurality of slaves that comply with a communication protocol that supports the VLAN function, via a communication network, the method comprising
converting a time synchronization communication frame transmitted from the plurality of masters into a communication frame that supports the VLAN function.

6. The communication relay method according to claim 5, wherein
the plurality of masters comply with IEEE (registered trademark) 802.1AS-2020, and
the method includes, when the plurality of slaves comply with IEEE 802.1AS-2011, allocating a value of a domainNumber field in a message header of the time synchronization communication frame to a VLAN ID field.

7. The communication relay method according to claim 6, comprising,
initializing the value of the domainNumber field and converting the time synchronization communication frame to a version that supports the IEEE 802.1AS-2011 in a case where allocation to the VLAN ID field is completed.

8. A computer program executed by a computer constituting a device for relaying communication between a plurality of masters that comply with a communication protocol that does not support a VLAN (Virtual Local Area Network) function and a plurality of slaves that comply with a communication protocol that supports the VLAN function, via a communication network, the program causing the computer to:
convert a time synchronization communication frame transmitted from the plurality of masters into a communication frame that supports the VLAN function; and
transmit the time synchronization communication frame to a destination slave.

9. The computer program according to claim 8, wherein
the plurality of masters comply with IEEE (registered trademark) 802.1AS-2020, and
when the plurality of slaves comply with IEEE 802.1AS-2011, the computer program causes the computer to allocate a value of a domainNumber field in a message header of the time synchronization communication frame to a VLAN ID field.

10. The computer program according to claim 9, the computer program causing the computer to
initialize the value of the domainNumber field and convert the time synchronization communication frame to a version that supports the IEEE 802.1AS-2011 in a case where allocation to the VLAN ID field is completed.
